# FASCICULE DE BREVET EUROPEEN

(11) **EP 1 711 394 B1**
(45) Date de publication et mention de la délivrance du brevet: **16.01.2008**
(21) Numéro de dépôt: 05717669.5
(22) Date de dépôt: 17.01.2005
(51) Int. Cl.: B62D 65/00

(54) **DISPOSITIF POUR LE TRANSPORT ET LE POSITIONNEMENT D'UN ENSEMBLE DE CARROSSERIE DE VEHICULE AUTOMOBILE.**
VORRICHTUNG FÜR DEN TRANSPORT UND DIE POSITIONIERUNG EINER KRAFTFAHRZEUGAUFBAUANORDNUNG
DEVICE FOR THE TRANSPORT AND POSITIONING OF A MOTOR VEHICLE BODY ASSEMBLY

(30) Priorité: 05.02.2004 FR 0401081
(43) Date de publication de la demande: 18.10.2006
(73) Titulaire: Peugeot Citroën Automobiles S.A., 78140 Vélizy Villacoublay (FR)
(72) Inventeur: HERMETZ, Fabrice, F-75018 PARIS (FR); GOURLIN, Jean-Marie, F-78250 HARDRICOURT (FR)
(86) Numéro de dépôt international: PCT/FR2005/050024
(87) Numéro de publication internationale: WO 2005/077739

(56) Documents cités:
- DE-A- 4 320 949
- US-A- 5 174 711
- US-A1- 2003 116 407
- PATENT ABSTRACTS OF JAPAN vol. 0103, no. 46 (M-537), 21 novembre 1986 (1986-11-21) & JP 61 146691 A (NAKANISHI KINZOKU KOGYO KK), 4 juillet 1986 (1986-07-04)

## Description

La présente invention concerne un dispositif permettant le transport et le positionnement d'un ensemble de carrosserie de véhicule automobile, communément appelé « caisse » le long d'une ligne de traitement industriel au sein d'une usine automobile, notamment pour l'application de produits pâteux sur l'ensemble de carrosserie.

Les opérations effectuées à l'aide de robots sont de plusieurs types : application de cordons d'étanchéité, pulvérisation de produits pâteux avec des trajectoires permettant des applications ciblées, pulvérisation précise de produit (par exemple bas de caisse).

Les opérations d'application de produits pâteux sous les caisses nécessitent une accessibilité sous la plate-forme du véhicule.

Les facteurs de réussite de ces applications sont la précision de positionnement de la pièce dans l'espace, la répétitivité du positionnement des pièces à appliquer, la rapidité de transfert des pièces de poste à poste permettant des temps d'application plus longs par les robots, l'accessibilité maximum des zones à appliquer par les robots. La précision de positionnement permet d'optimiser la largeur des cordons d'étanchéité ce qui réduit la quantité de produit appliqué par véhicule.

Les dispositifs actuellement connus permettant le transport des caisses, de poste à poste d'application, sont de quatre types comme expliqué ci-après :
- les caisses sont accrochées par des élingues à un convoyeur aérien de manutention. Dans ce cas, la précision de positionnement du plancher de caisse est difficile à obtenir (balancement des caisses). Les convoyeurs aériens ne permettent pas des transferts rapides du fait du balancement des charges.
- les caisses sont prises par le dessous par une balancelle en Cé elle-même accrochée à un convoyeur. Dans ce cas, la distance, les déformations, les jeux cumulés entre la voie de roulement et les points de prise de la caisse font que la précision de positionnement demandée nécessite le repositionnement de la balancelle à l'arrêt au plus près du plancher ou un repositionnement de trajectoire des robots avant application (prise de mesure ou recentrage par vision caméra). Le volume de la balancelle nécessite des espaces pour les voies de retour de ces balancelles entre le point de chargement et de déchargement.
- les caisses sont prises par le dessous par un convoyeur situé sous la caisse dans l'axe de la caisse. L'inconvénient majeur réside dans le fait que le positionnement du convoyeur ne permet pas l'implantation de robot dans l'axe de la pièce et nécessite de plus grandes longueurs de la ligne de traitement industriel. De plus les produits sont projetés sur le dispositif de manutention ce qui nécessite des nettoyages fréquents.
- les caisses sont prises par le dessous du pavillon par l'intermédiaire d'une balancelle elle-même accrochée à un convoyeur : dans ce cas, les efforts de levage des caisses et les réactions engendrées nécessitent le renforcement des pavillons. La précision de positionnement des surfaces à appliquer est fonction des tolérances de fabrication entre le pavillon et le dessous de la caisse. De plus, il est nécessaire pour les véhicules ne comportant pas de pavillon (cabriolets) d'installer sur le véhicule un outillage lourd et encombrant permettant sa préhension par la balancelle.

A titre d'exemple, on connaît via le document DE 43 20 949 A1 un dispositif de transport d'un ensemble de carrosserie le long d'une ligne de traitement industriel, qui comprend un cadre support de la caisse présentant un accès limité à cette dernière par le dessous.

Le dispositif suivant l'invention a pour but de pallier les inconvénients précédents.

Pour ce faire, l'invention a pour objet un dispositif permettant le transport et le positionnement d'un ensemble de carrosserie de véhicule automobile le long d'une ligne de traitement industriel, notamment pour l'application de produits pâteux sur l'ensemble de carrosserie, caractérisé en ce qu'il comprend un cadre à l'intérieur duquel l'ensemble de carrosserie est destiné à être placé, ledit cadre étant pourvu d'éléments porteurs sur lesquels est positionné l'ensemble de carrosserie.

Le dispositif suivant l'invention présente également une ou plusieurs des caractéristiques suivantes prises indépendamment ou en combinaison :
- le cadre a une forme sensiblement plane, parallèle au plan XY du référentiel véhicule,
- les éléments porteurs sont constitués de deux bras porteurs avant et de deux bras porteurs arrière reliés au cadre, les extrémités libres des bras porteurs étant conformées pour coopérer avec des portions inférieures de l'ensemble de carrosserie, de manière à assurer le positionnement et le maintien dudit ensemble.
- les bras porteurs sont conformés de sorte que les zones d'appui et de maintien de l'ensemble de carrosserie sur ces derniers sont situées sensiblement à la hauteur du plancher du véhicule.
- les deux bras porteurs avant coopèrent avec des zones de référence prévues sur l'ensemble de carrosserie, ces zones étant communes à différents types d'ensembles et permettant le positionnement adéquat de l'ensemble de carrosserie par rapport au cadre, quel que soit son type, en vue des traitements à appliquer.
- les bras porteurs sont constitués d'une première branche reliée au cadre de manière à pouvoir être articulée par rapport à ce dernier autour d'un axe sensiblement perpendiculaire au plan du cadre, la première branche étant orientée vers le dessous du cadre et se prolongeant par une seconde branche sensiblement parallèle au plan du cadre portant à son extrémité libre un élément de préhension de l'ensemble de carrosserie constitué d'un axe vertical remontant vers le plan du cadre et destiné à supporter l'ensemble de carrosserie.
- le cadre est constitué de deux profilés longitudinaux se rejoignant à leurs extrémités par deux profilés transversaux, de manière à former sensiblement un rectangle,
- le cadre comporte au moins un galet de roulement à proximité de chaque coin du rectangle, faisant saillie sous le cadre, chacun de ces galets coopérant avec une piste de roulement prévue sur chaque côté de la ligne de traitement, pour permettre le déplacement longitudinal du cadre,
- le cadre comporte au moins un galet de guidage faisant saillie sur un flan latéral du cadre, coopérant avec une piste de guidage adjacente de la ligne de traitement, de manière à empêcher le débordement latéral du cadre par rapport à la ligne de traitement lors de son déplacement
- le cadre comporte au moins une piste d'entraînement destinée à coopérer par friction avec des galets d'entraînement prévus sur la ligne de traitement, de manière à provoquer le déplacement du cadre.

D'autres caractéristiques et avantages de la présente invention apparaîtront à la lecture de la description détaillée qui va suivre, d'un exemple de réalisation non limitatif de l'invention et à l'examen des dessins annexés sur lesquels :
- la figure 1 représente une vue en perspective de la caisse posée sur le cadre selon l'invention,
- la figure 2 représente une vue en perspective du dessus du cadre de la figure 1,
- la figure 3 représente une vue en perspective du dessous du cadre de la figure 1,
- la figure 4 représente une vue agrandie d'un détail de réalisation du cadre de la figure 3,
- la figure 5 représente une vue arrière de la caisse posée sur le cadre selon l'invention, en situation sur la ligne de traitement industriel, et
- la figure 6 représente une vue du dessus de la caisse posée sur le cadre de la figure 5.

La caisse d'un véhicule constitue un ensemble de carrosserie devant transiter de poste à poste le long d'une ligne de traitement en usine, pour la mise en oeuvre du procédé industriel.

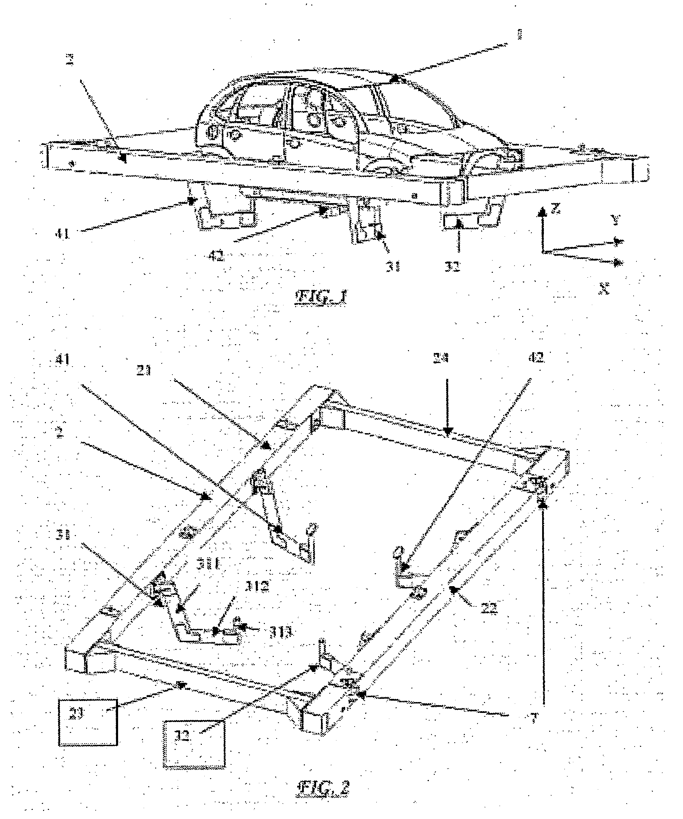

Comme cela est visible à la figure 1, le dispositif selon l'invention permettant de transporter et de positionner la caisse 1 le long de cette ligne de traitement comprend un cadre 2 fermé, à l'intérieur duquel la caisse 1 est disposée en appui sur des bras porteurs 31 , 32, 41 , 42 reliés au cadre 2.

Le cadre 2 peut être plan et orienté de façon parallèle au plan XY du référentiel véhicule comme illustré à la figure 1. Le cadre présente la forme générale d'un rectangle vu de dessus (figures 2, 3, 6). Il est par exemple constitué de deux profilés longitudinaux 21, 22 se rejoignant à leurs extrémités par deux profilés transversaux 23, 24. Ces profilés peuvent être constitués de tubes ou d'élément à section diverse, par exemple en I, en H etc.

La caisse 1 est disposée dans le cadre 2 de telle sorte que ce dernier 2 entoure la caisse du véhicule sensiblement à hauteur de la partie haute des longerons de caisse, qui sont des éléments de structure latéraux du soubassement du véhicule.

Pour le positionnement et le maintien de la caisse 1 par rapport au cadre 2, ce dernier soutien des bras porteurs avant 31, 32 et arrière 41, 42. En référence à la figure 2, ces bras sont constitués d'une première branche 311 reliée au cadre 2 de manière à pouvoir être articulée par rapport à ce dernier 2 autour d'un axe sensiblement perpendiculaire au plan du cadre. La première branche 311 est orientée vers le dessous du cadre 2 et se prolonge par une seconde branche 312 sensiblement parallèle au plan du cadre 2. L'extrémité libre de la seconde branche 312 porte un élément de préhension de la caisse 1 ayant la forme d'un axe orienté perpendiculairement au plan du cadre 2 et s'élevant depuis le dessous du cadre 2 vers ce dernier.

On notera que l'articulation entre les bras porteurs 31, 32, 41, 42 et le cadre 2 permet d'escamoter ces bras contre le cadre de manière à libérer l'espace à l'intérieur du cadre et à ainsi autoriser le passage de la caisse 1 lors de la mise en position ou du retrait de la caisse 1 par rapport au cadre 2 en usine. Bien entendu, des moyens de blocage (non représentés) sont prévus pour présenter et maintenir les bras porteurs dans leur position adéquate en vue de l'installation de la caisse 1 sur le dispositif.

On notera que les bras porteurs avant 31, 32 peuvent être conformés pour coopérer avec des zones de référence prévues sur la caisse 1. Ces zones sont des trous de diamètre 35 mm disposés sur chaque côté de la caisse dans sa partie avant, et ont un entre-axe de 1000 mm. Ces zones de référence sont communes à différents types de caisse 1 et permettent le positionnement adéquat de l'ensemble de carrosserie par rapport au cadre 2. La géométrie de la caisse 1 étant connue par rapport à ces zones de référence, les robots de la ligne de traitement peuvent aisément retrouver la géométrie de la caisse en fonction de la position du cadre sur la ligne de traitement et du type de caisse concerné.

Comme on peut le voir aux figures 2, 3 et 4, le cadre est en outre pourvu de galets 5 de roulement et de galets 7 de guidage pour assurer son déplacement le long de la ligne de traitement.

Dans chaque coin du cadre, un galet de roulement 5 monté à rotation sur le cadre 2 et faisant saillie sous ce dernier est prévu tandis que la ligne de traitement comporte deux pistes 6 de roulement parallèles sur lesquelles roulent ces galets 5 pour autoriser le déplacement du cadre 2.

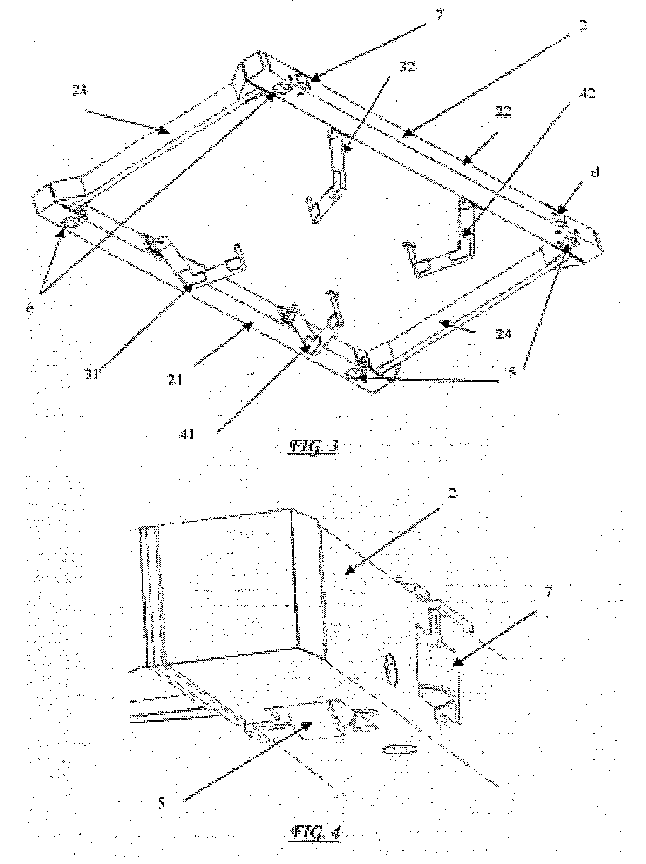

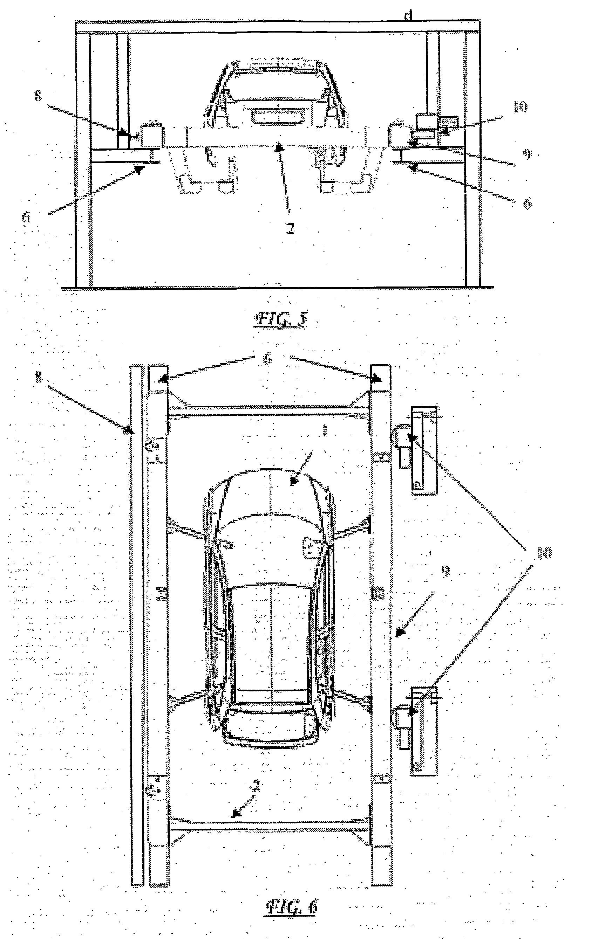

D'autre part, deux galets de guidage 7 montés à rotation sur un flan latéral du cadre 2 sont également prévus comme illustré aux figures 3 et 4, tandis que la ligne de traitement comporte une piste 8 de guidage contre laquelle roulent les galets de guidage de manière à empêcher le débordement latéral du cadre 2 par rapport à la ligne de traitement lors de son déplacement.

Le côté du cadre opposé, c'est à dire celui qui n'est pas adjacent à la ligne 8 de guidage comporte quant à lui une piste 9 d'entraînement sur son flan latéral, sur laquelle coopèrent par friction des galets 10 d'entraînement disposés de manière fixe sur la ligne de traitement en nombre suffisant et de manière espacés pour que le cadre soit toujours en regard de l'un au moins des galets 10 d'entraînement. De cette manière, la rotation des galets d'entraînement sous l'influence d'un moteur provoque le déplacement longitudinal du cadre le long de la ligne de traitement.

On notera que les galets 7 de guidage peuvent être prévus d'un seul côté uniquement du cadre 2 puisque les galets 10 d'entraînement empêche le débordement latéral du cadre vers le côté opposé à celui des galets de guidage, et font donc eux-même office de galets de guidage.

On comprendra que le dispositif suivant l'invention de par la forme et la position du cadre par rapport à la caisse, permet le dégagement du dessous de la caisse ce qui facilite l'application des produits à appliquer sur la caisse.

Le dispositif suivant l'invention permet également de rapprocher au maximum le point de mise en référence (ou zone de référence) de la caisse du support de la caisse sur la ligne, c'est à dire le cadre dans l'invention, ce qui permet un positionnement plus précis de la caisse et rend donc plus précises les opérations et applications de produits sur la caisse. Il en découle une économie de produits à appliquer.

Le dispositif suivant l'invention permet également de réduire les volumes utilisés dans le procédé industriel. Par exemple plusieurs cadres peuvent être superposés à distance les uns des autres et la caisse peut être transférée d'un cadre à l'autre par un déplacement perpendiculaire au plan des cadres.

En outre, des cadres sortis de la ligne de traitement peuvent être empilés les uns sur les autres pour également gagner de la place.

Le dispositif suivant l'invention permet également le transfert rapide entre les postes d'application de la ligne de traitement de la caisse.

L'invention n'est pas limitée au moyens qui viennent d'être décrits et comprend tous les équivalents techniques de ces moyens.

## Revendications

1. Dispositif permettant le transport et le positionnement d'un ensemble de carrosserie (1) de véhicule automobile le long d'une ligne de traitement industriel, notamment pour l'application de produits pâteux sur l'ensemble de carrosserie (1), comprenant un cadre (2) à l'intérieur duquel l'ensemble de carrosserie (1) est destiné à être placé, ledit cadre (2) étant pourvu d'éléments porteurs (31 ; 32 ; 41 ; 42) sur lesquels est positionné l'ensemble de carrosserie (1), **caractérisé en ce que** les éléments porteurs sont constitués de deux bras porteurs avant (31 ; 32) et de deux bras porteurs arrière (41 ; 42) reliés au cadre, les extrémités libres des bras porteurs étant conformées pour coopérer avec des portions inférieures de l'ensemble de carrosserie, de manière à assurer le positionnement et le maintien dudit ensemble (1), et que les bras porteurs (31 ; 32 ; 41 ; 42) ont à leur extrémité libre un élément de préhension (313) destiné à supporter l'ensemble de carrosserie, l'élément de préhension s'élevant depuis le dessous du cadre (2) vers le plan de ce dernier.

2. Dispositif selon la revendication 1, **caractérisé en ce que** le cadre (2) a une forme sensiblement plane, parallèle au plan XY du référentiel véhicule.

3. Dispositif selon la revendication 1 ou 2, **caractérisé en ce que** les bras porteurs (31 ; 32 ; 41 ; 42) sont conformés de sorte que les zones d'appui et de maintien de l'ensemble de carrosserie (1) sur ces derniers (31 ; 32 ; 41 ; 42) sont situées sensiblement à la hauteur du plancher du véhicule.

4. Dispositif selon la revendication 3, **caractérisé en ce que** les deux bras porteurs avant (31 ; 32) coopèrent avec des zones de référence prévues sur l'ensemble de carrosserie (1), ces zones étant communes à différents types d'ensembles et permettant le positionnement adéquat de l'ensemble de carrosserie (1) par rapport au cadre (2), quel que soit son type, en vue des traitements à appliquer.

5. Dispositif selon l'une quelconque des revendications 1 à 4, **caractérisé en ce que** les bras porteurs (31 ; 32 ; 41 ; 42) sont constitués d'une première branche (311) reliée au cadre (2) de manière à pouvoir être articulée par rapport à ce dernier (2) autour d'un axe sensiblement perpendiculaire au plan du cadre (2), la première branche (311) étant orientée vers le dessous du cadre (2) et se prolongeant par une seconde branche (312) sensiblement parallèle au plan du cadre portant à son extrémité libre l'élément de préhension (313) de l'ensemble de carrosserie constitué d'un axe vertical remontant vers le plan du cadre (2) et destiné à supporter l'ensemble de carrosserie (1).

6. Dispositif selon l'une quelconque des revendications 2 à 5, **caractérisé en ce que** le cadre (2) est constitué de deux profilés longitudinaux (21 ; 22) se rejoignant à leurs extrémités par deux profilés transversaux (23 ; 24), de manière à former sensiblement un rectangle.

7. Dispositif selon la revendication 6, **caractérisé en ce que** le cadre (2) comporte au moins un galet (5) de roulement à proximité de chaque coin du rectangle, faisant saillie sous le cadre (2), chacun de ces galets (5) coopérant avec une piste (6) de roulement prévue sur chaque côté de la ligne de traitement, pour permettre le déplacement longitudinal du cadre (2).

8. Dispositif selon la revendication 6 ou 7, **caractérisé en ce que** le cadre (2) comporte au moins un galet (7) de guidage faisant saillie sur un flan latéral du cadre (2), coopérant avec une piste (8) de guidage adjacente de la ligne de traitement, de manière à empêcher le débordement latéral du cadre (2) par rapport à la ligne de traitement lors de son déplacement.

9. Dispositif selon l'une quelconque des revendications 6 à 8, **caractérisé en ce que** le cadre (2) comporte au moins une piste d'entraînement (9) destinée à coopérer par friction avec des galets (10) d'entraînement prévus sur la ligne de traitement industriel, de manière à provoquer le déplacement du cadre (2).

## Claims

1. Device that enables the transport and positioning of a motor vehicle body assembly (1) along an industrial treatment line, especially for the application of paste-like products to the body assembly (1), comprising a frame (2) inside which the body assembly (1) is to be placed, said frame (2) being provided with supporting elements (31; 32; 41; 42) on which the body assembly (1) is positioned, the device being **characterized in that** the supporting elements are two front supporting arms (31; 32) and two rear supporting arms (41; 42) connected to the frame, the free ends of the supporting arms being shaped to engage with lower portions of the body assembly, in such a way as to keep said assembly (1) in position, and **in that** the supporting arms (31; 32; 41; 42) have at their free end a gripping component (313) designed to support the body assembly, the gripping component rising from beneath the frame (2) towards the plane of the latter.

2. Device according to Claim 1, **characterized in that** the shape of the frame (2) is basically planar, parallel to the XY plane of the vehicle reference frame.

3. Device according to Claim 1 or 2, **characterized in that** the supporting arms (31; 32; 41; 42) are shaped so that the areas on which the body assembly (1) rests and is held by said arms (31; 32; 41; 42) are approximately at the height of the vehicle floor.

4. Device according to Claim 3, **characterized in that** the two front supporting arms (31; 32) engage with reference areas located on the body assembly (1), these areas being common to different types of assemblies and making it possible for the body assembly (1) to be positioned appropriately relative to the frame (2), regardless of its type, to enable the treatments to be applied.

5. Device according to any one of Claims 1 to 4, **characterized in that** the supporting arms (31; 32; 41; 42) consist of a first arm (311) connected to the frame (2) in such a way that it can pivot relative to the latter (2) about an axis essentially perpendicular to the plane of the frame (2), the first arm (311) extending down from the frame (2) and being continued by a second arm (312) essentially parallel to the plane of the frame while its free end supports the body assembly gripping component (313) which consists of a vertical pin rising towards the plane of the frame (2) to support the body assembly (1).

6. Device according to any one of Claims 2 to 5, **characterized in that** the frame (2) consists of two longitudinal sections (21; 22) whose ends are connected by two transverse sections (23; 24), in such a way as to form essentially a rectangle.

7. Device according to Claim 6, **characterized in that** the frame (2) comprises at least one rolling wheel (5) near each corner of the rectangle, projecting from beneath the frame (2), each of these wheels (5) running on a rolling track (6) located on each side of the treatment line, to enable the frame (2) to travel longitudinally.

8. Device according to Claim 6 or 7, **characterized in that** the frame (2) comprises at least one guide wheel (7) projecting from a lateral edge of the frame (2) and running on an adjacent guide track (8) of the treatment line in such a way as to prevent the frame (2) moving sideways out of the treatment line as it moves along.

9. Device according to any one of Claims 6 to 8, **characterized in that** the frame (2) comprises at least one drive track (9) designed to act by friction in conjunction with drive wheels (10) located along the industrial treatment line, in such a way as to cause the frame (2) to move.

## Patentansprüche

1. Vorrichtung, die den Transport und die Positionierung einer Karosseriebaueinheit (1) eines Kraftfahrzeugs längs einer industriellen Bearbeitungslinie, insbesondere für die Aufbringung von pastenartigen Produkten auf die Karosseriebaueinheit (1), ermöglicht, mit einem Rahmen (2), in dem die Karosseriebaueinheit (1) angeordnet werden soll, wobei der Rahmen (2) mit Tragelementen (31; 32; 41; 42) versehen ist, an denen die Karosseriebaueinheit (1) positioniert wird, **dadurch gekennzeichnet, dass** die Tragelemente aus zwei vorderen Tragarmen (31; 32) und aus zwei hinteren Tragarmen (41; 42), die mit dem Rahmen verbunden sind, gebildet sind, wobei die freien Enden der Tragarme so ausgebildet sind, dass sie mit unteren Abschnitten der Karosseriebaueinheit zusammenwirken können, so dass das Positionieren und Halten der Anordnung (1) sichergestellt ist, und dass die Tragarme (31; 32; 41; 42) an ihrem freien Ende ein Greifelement (313) besitzen, das dazu bestimmt ist, die Karosseriebaueinheit zu unterstützen, wobei sich das Greifelement von unterhalb des Rahmens (2) zu der Ebene des Rahmens (2) erhebt.

2. Vorrichtung nach Anspruch 1, **dadurch gekennzeichnet, dass** der Rahmen (2) eine im Wesentliche ebene Form hat, die zu der XY-Bezugsebene des Fahrzeugs parallel ist.

3. Vorrichtung nach Anspruch 1 oder 2, **dadurch gekennzeichnet, dass** die Tragarme (31; 32; 41; 42) so beschaffen sind, dass sich die Zonen des Abstützens und Haltens der Karosseriebaueinheit (1) an den Tragarmen (31; 32; 41; 42) im Wesentlichen auf Höhe des Bodens des Fahrzeugs befinden.

4. Vorrichtung nach Anspruch 3, **dadurch gekennzeichnet, dass** die zwei vorderen Tragarme (31; 32) mit Bezugszonen zusammenwirken, die an der Karosseriebaueinheit (1) vorgesehen sind, wobei diese Zonen verschiedenen Anordnungstypen gemeinsam sind und die geeignete Positionierung der Karosseriebaueinheit (1) in Bezug auf den Rahmen (2) im Hinblick auf die anzuwendenden Bearbeitungen unabhängig von ihrem Typ ermöglichen.

5. Vorrichtung nach einem der Ansprüche 1 bis 4, **dadurch gekennzeichnet, dass** die Tragarme (31; 32; 41; 42) aus einem ersten Schenkel (311), der mit dem Rahmen (2) in der Weise verbunden ist, dass er in Bezug auf den Rahmen (2) um eine zu der Ebene des Rahmens (2) im Wesentlichen senkrechte Achse angelenkt ist, wobei der erste Schenkel (311) zur Unterseite des Rahmens (2) orientiert ist und durch einen zweiten Schenkel (312) verlängert ist, der zu der Ebene des Rahmens im Wesentlichen parallel ist und an seinem freien Ende das Element (313) zum Greifen der Karosseriebaueinheit trägt, das aus einer vertikalen Achse gebildet ist, die zu der Ebene des Rahmens (2) ansteigt und dazu bestimmt ist, die Karosseriebaueinheit (1) zu unterstützen.

6. Vorrichtung nach einem der Ansprüche 2 bis 5, **dadurch gekennzeichnet, dass** der Rahmen (2) aus zwei longitudinalen Profilen (21; 22) gebildet ist, die an ihren Enden durch zwei transversale Profile (23; 24) zusammengefügt sind, so dass im Wesentlichen ein Rechteck gebildet wird.

7. Vorrichtung nach Anspruch 6, **dadurch gekennzeichnet, dass** der Rahmen (2) in der Nähe jeder Ecke des Rechtecks wenigstens eine Laufrolle (5) aufweist, die unter dem Rahmen (2) vorsteht, wobei jede dieser Rollen (5) mit einer Laufbahn (6) zusammenwirkt, die an jeder Seite der Bearbeitungslinie vorgesehen ist, um die longitudinale Verlagerung des Rahmens (2) zu ermöglichen.

8. Vorrichtung nach Anspruch 6 oder 7, **dadurch gekennzeichnet, dass** der Rahmen (2) wenigstens eine Führungsrolle (7) enthält, die an einer Seitenplatte des Rahmens (2) vorsteht und mit einer Führungsbahn (8) benachbart zu der Bearbeitungslinie zusammenwirkt, derart, dass ein seitliches Weglaufen des Rahmens (2) in Bezug auf die Bearbeitungslinie während seiner Verlagerung verhindert wird.

9. Vorrichtung nach einem der Ansprüche 6 bis 8, **dadurch gekennzeichnet, dass** der Rahmen (2) wenigstens eine Antriebsbahn (9) enthält, die dazu bestimmt ist, durch Reibung mit Antriebsrollen (10), die an der industriellen Bearbeitungslinie vorgesehen sind, zusammenzuwirken, derart, dass die Verlagerung des Rahmens (2) hervorgerufen wird.
